# EUROPEAN PATENT APPLICATION

(11) **EP 2 378 271 A2**
(43) Date of publication of application: **19.10.2011**
(21) Application number: 11250474.1
(22) Date of filing: 15.04.2011
(51) Int. Cl.: G01N 15/06

(54) **Particulate matter detecting device**

(30) Priority: 16.04.2010 JP 2010094720
(71) Applicant: NGK Insulators, Ltd., Nagoya-City, Aichi Pref. 467-8530 (JP)
(72) Inventor: Tokuda, Masahiro, Nagoya City, Aichi-ken 467-8530 (JP); Nishikawa, Satoshi, Nagoya City, Aichi-ken 467-8530 (JP); Sakuma, Takeshi, Nagoya City, Aichi-ken 467-8530 (JP); Egami, Takashi, Nagoya City, Aichi-ken 467-8530 (JP); Kondo, Atsuo, Nagoya City, Aichi-ken 467-8530 (JP)
(74) Representative: Paget, Hugh Charles Edward

(57) **Abstract**

The particulate matter detecting device 100 of the present invention includes: a sensor element 10 having a plate-shaped element substrate 11, at least one pair of measurement electrodes 12 arranged on one end face 16 of this element substrate 11, a heater electrode 13 arranged on either of end faces or inside of the element substrate 11, and a plurality of lead terminals 14 arranged on the other end face 17 of the element substrate 11 and electrically connected to each of the measurement electrodes 12 and the heater electrode 13; and an outer sheath body 20 having a columnar barrel portion 21 and a barrel-portion end face 22 arranged on one end face 26 of the barrel portion 21, in which the sensor element 10 is arranged in the barrel portion 21 of the outer sheath body 20 such that the pair of measurement electrodes 12 is exposed from an open frontal area 23 of the barrel-portion end face 22.

## Description

### BACKGROUND OF THE INVENTION

### Field of the Invention

The present invention relates to a particulate matter detecting device. More particularly, the present invention relates to a particulate matter detecting device which is extremely small-sized and can be manufactured inexpensively.

### Related Background of the Invention

Flue gas and diesel engine exhaust gas contain particulate matter (PM) such as soot, which causes air pollution. In order to remove them, a filter made of ceramic and the like (diesel particulate filter: DPF) has been widely used. The DPF made of ceramic can be used for a long period, but defects such as a crack or melting can occur due to thermal deterioration or the like, and it is likely that particulate matter leak, even though in a small amount. In the case of occurrence of such a defect, it is extremely important to immediately detect the occurrence of the defect and to recognize abnormality of a device from the viewpoint of air-pollution prevention.

As a method of detecting occurrence of such a defect, a method is known that a particulate matter detecting device is provided on the downstream side of the DPF (See Patent Document 1, for example).

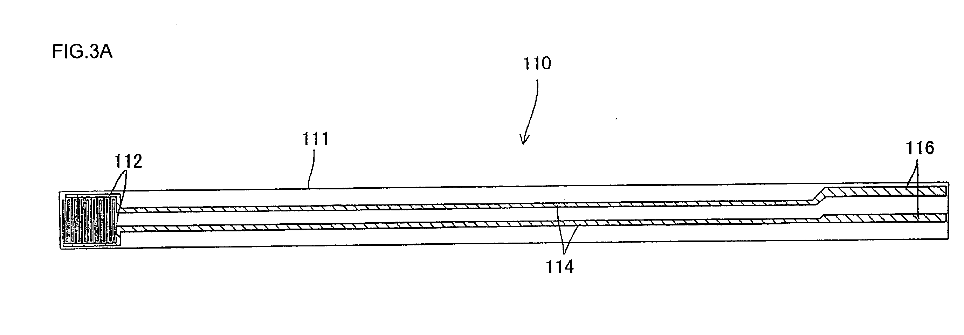

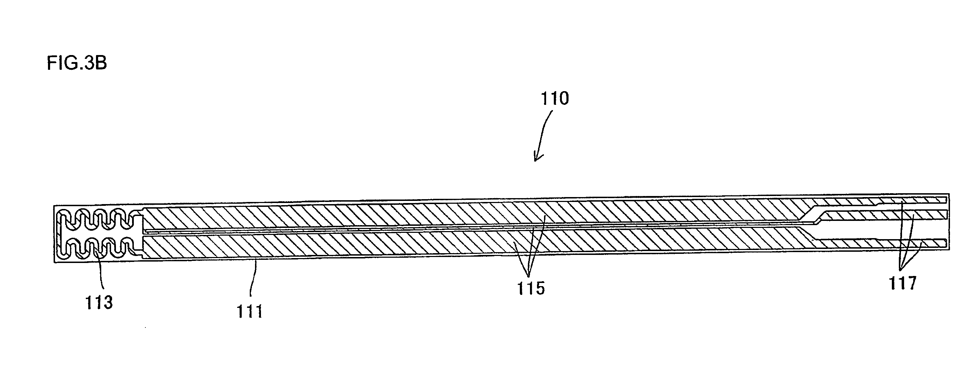

As such a particulate matter detecting device, a particulate matter detecting device provided with a sensor element 110 in which a pair of measurement electrodes 112 are arranged at one of ends as shown in Figs. 3A and 3B is proposed, and the sensor element 110 in which the measurement electrodes 112 are arranged has a plate-shaped element substrate 111, which is elongated in one direction, so that the particulate matter in an exhaust gas can be efficiently sampled and also heat from the exhaust gas or the like does not transfer to the entire device when the sensor element is inserted into a through channel through which the exhaust gas passes.

The plate-shaped element substrate 111, which is elongated in one direction, as above, has a pair of the measurement electrodes 112 at one of the ends and lead terminal 116 is arranged at the other end, and further, on the element substrate 111, wiring 114 for connecting (electrically connecting) the measurement electrodes 112 on one end and the lead terminal 116 on the other end is arranged.

Also, this sensor element 110 is to measure particulate matter in an exhaust gas by making the particulate matter adhere to the measurement electrodes 112 of the sensor element 110 and by measuring electric characteristics between a pair of the measurement electrodes 112, but since the particulate matter adhering to the measurement electrodes 112 need to be burned and removed regularly, a heater electrode 113 for burning and removing the particulate matter adhering to the measurement electrodes 112 is disposed on the one end side of the element substrate 111, for example. As for this heater electrode 113, too, a lead terminal 117 is arranged on the other end similarly to the measurement electrodes 112, and further, on the element substrate 111, wiring 115 for connecting the heater electrode 113 and the lead terminal 117 on the other end is arranged.

The sensor element having the plate-shaped element substrate, which is elongated in one direction, as above, that is, a plate-shaped sensor element elongated in one direction is arranged inside a cylindrical outer sheath body and is fixed by filling a gap inside the outer sheath body with a powder such as insulator, talc and the like in a compressed state.

[Patent Document 1] JP 2007-519899 A

### SUMMARY OF THE INVENTION

### Problems to be Solved by the Invention

Since this type of a particulate matter detecting device performs measurement in a state with one end of the sensor element exposed to an exhaust gas, a pair of the measurement electrodes, the heater electrode, and the wirings connected to the respective electrodes are formed by a metal material excellent in heat resistance and corrosion resistance. And as the metal material excellent in heat resistance and corrosion resistance, precious metal such as expensive platinum or the like has been mainly used. As described above, since the sensor element has a plate shape elongated in one direction, an amount of platinum used for the wirings arranged from one end to the other end of the element substrate is extremely large, and the large amount of platinum used in the wirings has incurred an increase in a manufacturing cost. Also, as for the wiring connected to the heater electrode, in order to set a resistance value of the wiring portion lower than that of the heater electrode, the thickness of the wiring needs to be increased, which has further increased the use amount of platinum. If the wiring of the heater electrode is thinned, for example, the resistance value of the wiring portion is increased, and heat is generated not only in the portion where the heater electrode is arranged but also in the wiring portion, and a problem is caused that the sensor element as a whole is heated.

Also, the plate-shaped sensor element elongated in one direction has a problem that the sensor element is easily broken by vibration of an automobile or the like or collision of solid foreign substances (incoming substances) outside the device or flying on a flow of an exhaust gas and the like. Also, a particulate matter detecting device provided with such a plate-shaped sensor element elongated in one direction has a problem that the device is not easy to be fixed to an exhaust system of an automobile in a stable state.

The present invention was made in view of the above-described problems and provides a particulate matter detecting device which is extremely small-sized and can be manufactured inexpensively.

### Means for Solving the Problems

In order to achieve the above-described object, the present invention provides a particulate matter detecting device as follows.

[1] A particulate matter detecting device provided with a sensor element having a plate-shaped element substrate, at least one pair of measurement electrodes arranged on one end face of the element substrate, a heater electrode arranged on either one of the end faces or inside thereof, and a plurality of lead terminals arranged on the other end face of the element substrate and electrically connected to each of the measurement electrodes and the heater electrode; and an outer sheath body having a columnar barrel portion and a barrel-portion end face arranged on one of end faces of the barrel portion and having an open frontal area formed for exposing the measurement electrode of the sensor element toward the outside of the one end face of the barrel portion, wherein the sensor element is arranged inside the barrel portion such that the measurement electrode is exposed from the open frontal area of the barrel-portion end face; and the one end face side of the outer sheath body is brought into contact with a gas to be measured, particulate matter contained in the gas to be measured is made to adhere to the measurement electrodes, and a change in electric characteristics between the measurement electrodes is measured so that the particulate matter in the gas to be measured can be detected.

[2] The particulate matter detecting device described in the above-described [1], in which the measurement electrode of the sensor elements are arranged at the center part of one of the end faces of the element substrate.

[3] The particulate matter detecting device described in the above-described [2], in which each measurement electrode constituting one pair of the measurement electrodes is a comb-like electrode having a plurality of planarly aligned comb-tooth portions and a comb spine portion for connecting the plurality of comb-tooth portions at one end thereof and is arranged such that the respective comb-tooth portions of the measurement electrodes are meshed with each other.

[4] The particulate matter detecting device described in the above-described [2] or [3], in which the heater electrode of the sensor element is arranged in a range including a region where the measurement electrodes are arranged on the one end face of the either of the end faces or inside the element substrate.

[5] The particulate matter detecting device described in any one of the above-described [2] to [4], in which the lead terminal of the sensor element is arranged at least on an outer peripheral portion of the other end face of the element substrate.

[6] The particulate matter detecting device described in any one of the above-described [1] to [5], further provided with a sensor connection portion having a hollow columnar insulator having an open frontal area formed on at least one of end faces, a plurality of connection terminals arranged on the one end face of the insulator and capable of electric connection with the plurality of lead terminals of the sensor element by bringing the insulator into contact with the other end face of the sensor element, and a plurality of extraction electrodes that is electrically connected to each of the plurality of connection terminals and that penetrates the inside of the insulator and is arranged from the one end face to the other end face.

[7] The particulate matter detecting device described in [6], further provided with an elastic member for pressing the sensor element and the sensor connection portion toward the barrel-portion end face side of the outer sheath body and bringing the plurality of lead terminals of the sensor element into pressure contact with the plurality of connection terminals of the sensor connection portion.

[8] The particulate matter detecting device described in [7], further provided with a second insulator arranged between the sensor connection portion and the elastic member for transmitting an elastic force of the elastic member to the sensor connection portion.

### Advantages of the Invention

In the particulate matter detecting device of the present invention, the sensor element has the plate-shaped element substrate, at least a pair of the measurement electrodes arranged on the one end face of this element substrate, the heater electrode arranged on either one of the end faces of the element substrate or inside thereof, and the plurality of lead terminals arranged on the other end face of the element substrate and electrically connected to each of the measurement electrodes and the heater electrode, and as compared with the conventional plate-shaped sensor element elongated in one direction, an amount of a metal material such as expensive platinum or the like used for the wiring can be drastically reduced, and the sensor element can be manufactured extremely inexpensively. More specifically, the wiring connected to each electrode may be such that the length thereof corresponds to the thickness of the plate-shaped element substrate, and a use amount of the metal material is extremely small, and moreover, nonconformity such as disconnection of wiring or the like hardly occurs.

Also, since in the sensor element, the measurement electrode is arranged so as to be exposed from the open frontal area of the barrel-portion end face inside the barrel portion constituting the outer sheath body, size reduction of the particulate matter detecting device can be realized. As a result, installation (fixing) of the particulate matter detecting device to the exhaust system is facilitated, and breakage of the device by a collision of an incoming substance and the like can be effectively prevented.

Also, in the particulate matter detecting device of the present invention, by further providing the sensor connection portion having the hollow columnar insulator having an open frontal area formed at least on the one end face, the plurality of connection terminals arranged on the one end face of this insulator and capable of electric connection with the plurality of lead terminals of the sensor element by bringing the insulator into contact with the other end face of the sensor element, and the plurality of extraction electrodes electrically connected to each of the plurality of connection terminals and penetrating the inside of the insulator and arranged from the one end face to the other end face, the plurality of lead terminals on the other end face of the sensor element (that is, on the back face of the sensor element) and the plurality of connection terminals of the sensor connection portion can be connected to each other by pressure contact extremely easily. Also, by further providing the sensor connection portion having the above hollow columnar insulator, even if the sensor element is heated, heat is hard to be transferred to the other end face side of the sensor connection portion. Also, since the sensor connection portion has a structure in little contact with the exhaust gas, an inexpensive and general-purpose metal material can be used for the extraction electrode and the like used for the sensor connection portion.

### BRIEF DESCRIPTION OF THE DRAWINGS

Fig. 1A is a perspective view schematically illustrating an embodiment of a particulate matter detecting device of the present invention.
Fig. 1B is a front view schematically illustrating the embodiment of the particulate matter detecting device of the present invention.
Fig. 1C is a schematic diagram illustrating an A-A' section in Fig. 1B.
Fig. 2A is a plan view schematically illustrating one end face side of a sensor element used in the embodiment of the particulate matter detecting device of the present invention.
Fig. 2B is a side view schematically illustrating a side face of a sensor element used in the embodiment of the particulate matter detecting device of the present invention.
Fig. 2C is a plan view schematically illustrating the other end face side of the sensor element used in the embodiment of the particulate matter detecting device of the present invention.
Fig. 2D is a schematic diagram illustrating a B-B´ section in Fig. 2B.
Fig. 3A is a plan view schematically illustrating an upper face of a sensor element of a conventional particulate matter detecting device.
Fig. 3B is a plan view schematically illustrating a lower face of the sensor element of the conventional particulate matter detecting device.

### DESCRIPTION OF THE PREFERRED EMBODIMENTS

An embodiment of the present invention will be described below in more detail, but the present invention is not limited by the following embodiment but it should be understood that appropriate design changes, improvements and the like can be made on the basis of a usual knowledge of those skilled in the art within the scope not departing from the gist of the present invention.

### [1] Particulate matter detecting device:

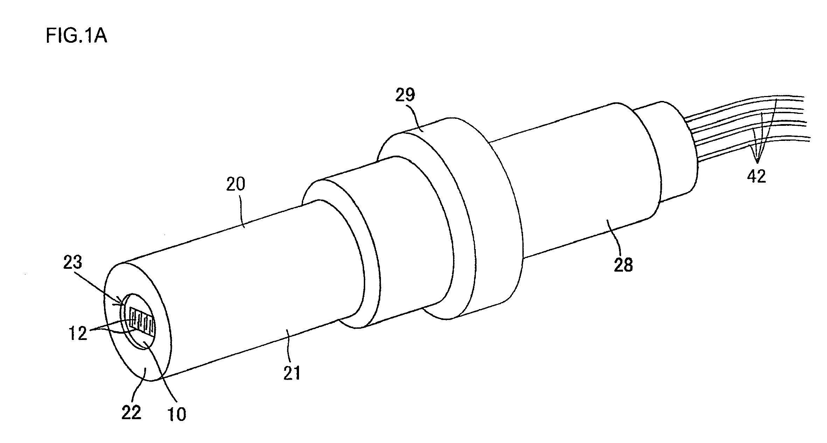

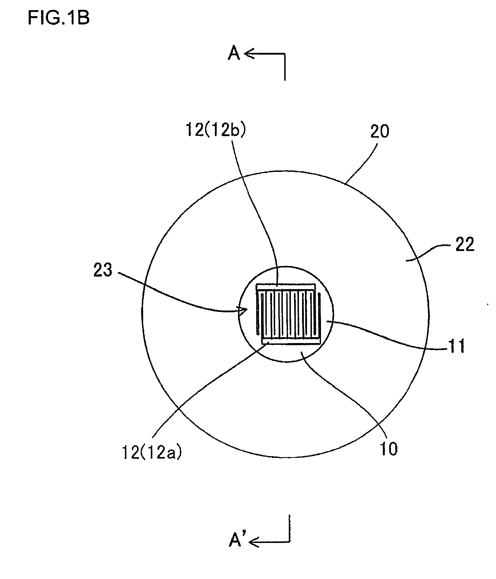

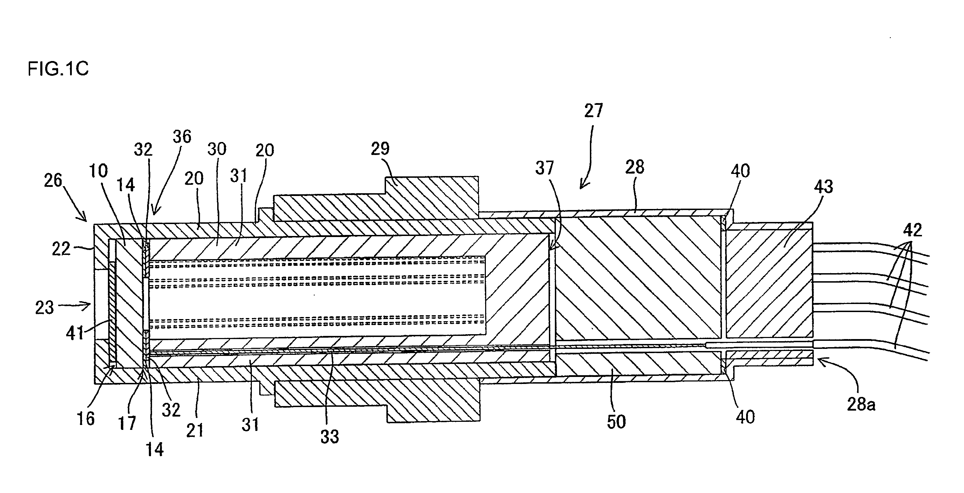

An embodiment of a particulate matter detecting device of the present invention is, as shown in Figs. 1A to 1C, a particulate matter detecting device 100 provided with a sensor element 10 and an outer sheath body 20 for containing the sensor element 10 inside. Here, Fig. 1A is a perspective view schematically illustrating an embodiment of a particulate matter detecting device of the present invention, Fig. 1B is a front view schematically illustrating the embodiment of the particulate matter detecting device of the present invention, and Fig. 1C is a schematic diagram illustrating an A-A' section in Fig. 1B.

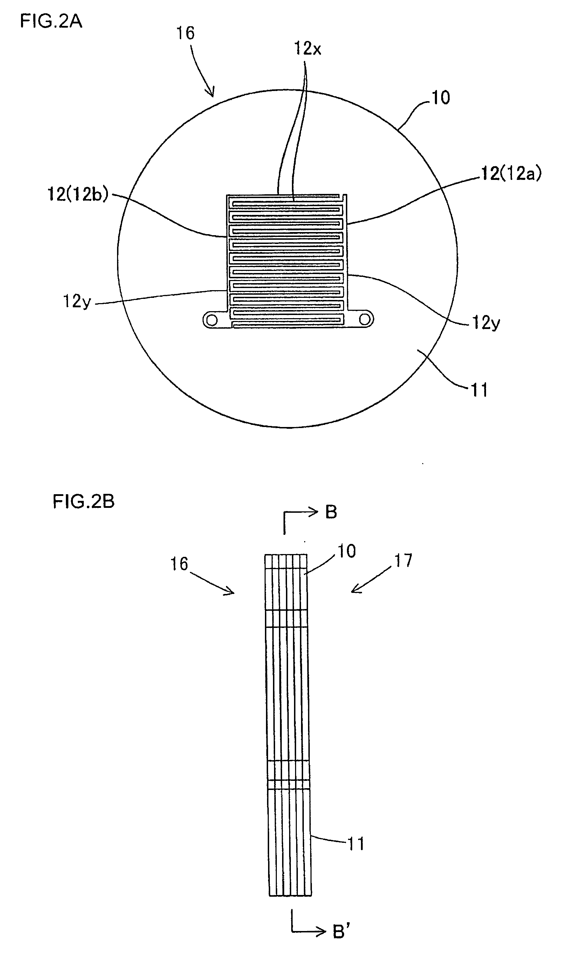

The sensor element 10 has, as shown in Figs. 2A to 2D, a plate-shaped element substrate 11, at least a pair of measurement electrodes 12 (a pair of measurement electrodes 12a and 12b in Fig. 2A) arranged on one end face 16 of this element substrate 11, a heater electrode 13 arranged on either one of end faces of the element substrate 11 or inside thereof, and a plurality of lead terminals 14 (14a to 14d) arranged on the other end face 17 of the element substrate 11 and electrically connected to each of the at least a pair of measurement electrodes 12a and 12b and the heater electrode 13.

In such sensor element 10, as compared with a conventional plate-shaped sensor element elongated in one direction, an amount of a metal material such as expensive platinum and the like used for wiring can be drastically reduced, and the sensor element can be manufactured extremely inexpensively. More specifically, the wiring connected to each electrode may be such that the length thereof corresponds to the thickness of the plate-shaped element substrate, and a use amount of the metal material is extremely small, and moreover, nonconformity such as disconnection of wiring hardly occurs.

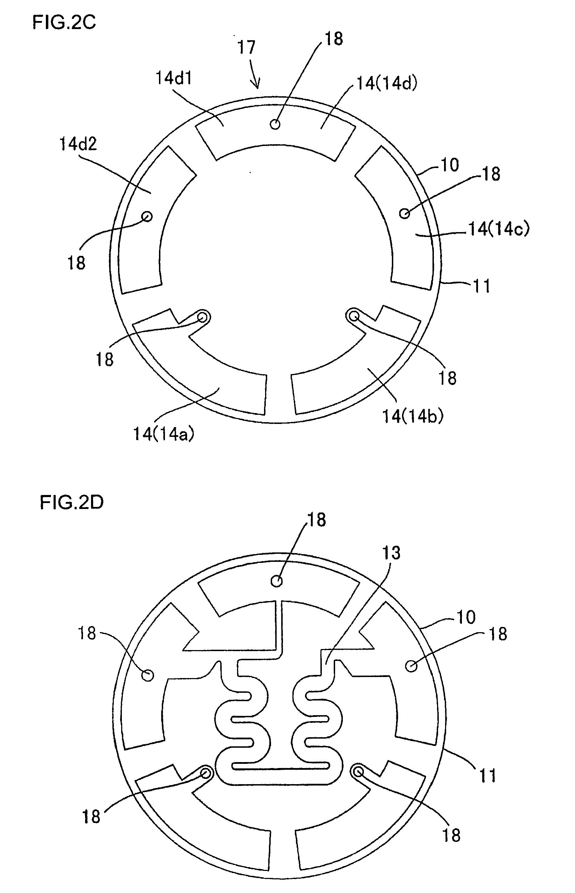

Here, Fig. 2A is a plan view schematically illustrating one end face side of the sensor element used in the embodiment of particulate matter detecting device of the present invention. Fig. 2B is aside view schematically illustrating a side face of a sensor element used in the embodiment of the particulate matter detecting device of the present invention. Fig. 2C is a plan view schematically illustrating the other end face side of the sensor element used in the embodiment of the particulate matter detecting device of the present invention. Fig. 2D is a schematic diagram illustrating a B-B´ section in Fig. 2B.

Also, as shown in Figs. 1A to 1C, the outer sheath body 20 used for the particulate matter detecting device 100 of this embodiment has a columnar barrel portion 21 and a barrel-portion end face 22 arranged on one end face 26 fo the barrel portion 21 and having an open frontal area 23 formed from which at least a pair of measurement electrodes 12a and 12b of the sensor element 10 are exposed to the outside of the one end face 26 of the barrel portion 21. And since the sensor element 10 has each of the measurement electrodes 12a and 12b arranged inside the barrel portion 21 of the outer sheath body 20 so as to be exposed from the open frontal area 23 of the barrel-portion end face 22, size reduction of the particulate matter detecting device 100 can be realized. As a result, installation (fixing) of the particulate matter detecting device 100 to the exhaust system is facilitated, and breakage of the device by a collision of an incoming substance and the like can be effectively prevented. Though not particularly limited, the sensor element 10 is preferably arranged in parallel with the barrel-portion end face 22 (that is, so that the plate-shaped sensor element 10 and the barrel-portion end face 22 are in parallel with each other) as shown in Fig. 1C, for example.

Inside the barrel portion 21 of the outer sheath body 20, wiring or an electrode for electric connection with the plurality of lead terminals 14 of the sensor element 10 is arranged and connected from the other end of the outer sheath body 20 to a detection portion (not shown) for detecting a change in electric characteristics measured in a power supply (not shown) and the sensor element 10 by wiring 42 such as a cable harness and the like.

In the particulate matter detecting device 100 of this embodiment, one end face side of the outer sheath body 20 is brought into contact with a gas to be measured, particulate matter contained in the gas to be measured is made to adhere to a pair of the measurement electrodes 12a and 12b of the sensor element 10, and the change in the electric characteristics between a pair of the measurement electrodes 12a and 12b is measured so as to detect the particulate matter in the gas to be measured.

More specifically, by bringing the one end face side of the outer sheath body 20 into contact with the gas to be measured, that is, the exhaust gas, the particulate matter contained in the gas to be measured are made to be adsorbed by (made to adhere to) the at least a pair of measurement electrodes 12a and 12b arranged so as to be exposed from the open frontal area 23 on the one end face of the outer sheath body 20 (that is, the open frontal area 23 in the barrel-portion end face 22). Then, by measuring the change in the electric characteristics between the at least a pair of measurement electrodes 12a and 12b, the mass of the particulate matter adsorbed by the at least a pair of measurement electrodes 12a and 12b is measured, and the mass of the particulate matter in the entire exhaust gas is roughly estimated on the basis of the obtained measurement value. As a result, a smaller amount of the particulate matter can be measured.

The particulate matter detecting device of this embodiment is installed on the downstream side of a filter such as a DPF and can be preferably used as a detecting device for checking whether the particulate matter is favorably removed or not by this filter.

Also, the particulate matter detecting device 100 of this embodiment is preferably further provided with, as shown in Figs. 1A to 1C, a sensor connection portion 30 having a hollow columnar insulator 31 having an open frontal area formed on at least one end face, a plurality of connection terminals 32 arranged on one end face 36 of the insulator 31 and capable of electric connection with the plurality of lead temrinals 14 of the sensor element 10 by bringing the insulator 31 into contact with the other end face 17 of the sensor element 10, and a plurality of extraction electrodes 33 electrically connected to each of the plurality of connection terminals 32 and penetrating the inside of the insulator 31 and arranged from one end face 36 to the other end face 37.

By configuring as above, the plurality of lead terminals 14 on the other end face 17 of the sensor element 10 (that is, the back face of the sensor element) and the plurality of connection terminals 32 of the sensor connection portion 30 can be connected to each other by pressure contact extremely easily. Also, by means of the hollow columnar insulator 31, even if the sensor element 10 is heated, heat is hard to be transferred to the other end face 37 side of the sensor connection portion 30, and heating of the entire device can be effectively prevented. Also, since the sensor connection portion 30 has a structure in little contact with the exhaust gas, an inexpensive and general-purpose metal material can be used for the extraction electrode 33 and the like used in the sensor connection portion 30. As a result, a manufacturing cost of the particulate matter detecting device 100 can be further reduced.

The particulate matter detecting device of this embodiment is preferably further provided with an elastic member 40 for pressing the sensor element 10 and the sensor connection portion 30 toward the barrel-portion end face 22 side of the outer sheath body 20 (that is, the one end face 26 side) and for bringing the plurality of lead terminals 14 of the sensor element 10 into pressure contact with the plurality of connection terminals 32 of the sensor connection portion 30.

Also, the particulate matter detecting device 100 of this embodiment may be further provided with a second insulator 50 arranged between the sensor connection portion 30 and the elastic member 40 and transferring an elastic force of the elastic member 40 to the sensor connection portion 30. By configuring as above, the elastic force of the elastic member 40 constituted by a disc spring or the like can be uniformly and favorably transferred to the other end face 37 of the sensor connection portion 30, and reliability of electric connection between the sensor element 10 and the sensor connection portion 30 can be made better.

The particulate matter detecting device of this embodiment will be described below in more detail for each constituent element.

### [1-1] Sensor element:

The sensor element used in the particulate matter detecting device of this embodiment has, as shown in Figs. 2A to 2D, the plate-shaped element substrate 11, at least a pair of the measurement electrodes 12 arranged on the one end face 16 (hereinafter referred to as the "front face" of the element substrate 11 in some cases) of the element substrate 11, the heater electrode 13 arranged on either one of the end faces (that is, the one end face or the other end face) of the element substrate 11 or inside thereof, and a plurality of the lead terminals 14 arranged on the other end face 17 (hereinafter referred to as the "back face" of the element substrate 11 in some cases) of the element substrate 11.

The element substrate is a substrate on which a pair of measurement electrodes and the like is arranged, and a plate-shaped member formed by a dielectric body such as ceramics can be preferably used. Here, in this embodiment, the "dielectric body" refers to a substance with precedence on dielectric performance over conductivity and to a substance behaving as an insulator with respect to a DC voltage.

As for the surface shape of the element substrate, it can be determined as appropriate by the shape of each of the pair of measurement electrodes arranged on one end face, for example, but other than a circular shape as shown in Fig. 2A, polygonal shapes including a square, a hexagon and the like can be cited.

The size of the one end face of the element substrate (in other words, the size of one end face of the sensor element) is not particularly limited, but the length of a diameter of one end face of the element substrate (in the case of a polygonal shape, the length of a line segment passing the center of the polygonal shape and equally dividing the area) is preferably 2 to 30 mm or more preferably 5 to 15 mm, or particularly preferably 9 to 12 mm. If the length is less than 2 mm, the sensor element is too small to make accurate measurement difficult, while if the length exceeds 30 mm, the sensor element is so large that the size of the particulate matter detecting device is increased.

The thickness of the element substrate is preferably 0.2 to 10 mm or more preferably 0.5 to 2.0 mm, or particularly preferably 0.75 to 1.5 mm. If the thickness is less than 0.2 mm, manufacture of the element substrate having the heater electrode arranged inside might become difficult. Also, strength of the element substrate is lower and can be easily broken. On the other hand, if the thickness exceeds 10 mm, the sensor element becomes excessively thick, and power of the heater might need to be increased more than necessary when the sensor element is heated. Also, it is necessary to increase the thickness of the sectional area of the wiring in order to reduce a resistance value of the wiring portion (via connection conductivity portion or a conductivity portion on the sensor element side face) to the lead terminal arranged on the other end face smaller than that of the heater electrode, and a use amount of an electrode material of the wiring portion might need to be further increased.

Such an element substrate is preferably formed by laminating a plurality of tape-shaped ceramic (ceramic green sheet). As a result, the plurality of tape-shaped ceramic is laminated while sandwiching the heater electrode between them, and by arranging the measurement electrodes and the lead terminals on the front face and the back face, the sensor element having a predetermined shape can be efficiently fabricated.

The element substrate is preferably at least one type selected from a group consisting of alumina, cordierite, mullite, glass, zirconia, magnesia, and titania, for example. Among them, alumina can be used preferably. Such an element substrate has excellent heat resistance, insulation breakdown resistance and the like.

As shown in Fig. 2A, the measurement electrodes 12a and 12b of the sensor element 10 are preferably arranged at the center part of the one end face 16 of the element substrate 11. By configuring as above, as shown in Fig. 1B, if the sensor element 10 is arranged inside the barrel portion 21 of the outer sheath body 20, the measurement electrodes 12a and 12b can be favorably exposed from the open frontal area 23 of the barrel-portion end face 22 of the outer sheath body 20. The measurement electrodes may be constituted by three or more measurement electrodes (two pairs or more of the measurement electrodes) as long as at least one pair is formed.

The center part on the one end face of the element substrate refers to a region corresponding to 5 to 50% of the area on the one end face from the center of the one end face of the element substrate. The measurement electrode is preferably arranged in a region corresponding to 10 to 30% of the area on the one end face from the center of the one end face of the element substrate.

The measurement electrode preferably uses a metal material excellent in heat resistance and corrosion resistance. Specifically, platinum, iridium, palladium, ruthenium, osmium, rhodium, silver, nickel, gold and the like can be cited, and particularly, platinum can be used favorably.

At least one pair of the measurement electrodes are disposed opposite to each other, and a change in the electrical characteristics between the measurement electrodes arranged oppositely is measured. A distance between the measurement electrodes is preferably set in a range that the change in the electrical characteristics between the measurement electrodes can be clearly measured when the particulate matter adhere between the measurement electrodes or their peripheries. The distance is preferably approximately 0.2 to 10 mm, for example.

As for at least a pair of the measurement electrodes, each measurement electrode may be a linear electrode, and the linear electrodes may be arranged in parallel, but as the sensor element 20 shown in Fig. 2A, the respective measurement electrodes 12a and 12b constituting the pair of measurement electrodes 12 is a comb-like electrode having a plurality of comb-tooth portions 12x aligned on a plane and a comb spine portion 12y for connecting the plurality of comb-tooth portions at one ends thereof, and the comb-tooth portions 12x of the respective measurement electrodes 12a and 12b are preferably arranged to be meshed with each other. By configuring as above, a portion where the pair of measurement electrodes 12a and 12b are arranged oppositely can be made long (wide), and measurement sensitivity and measurement accuracy of the electrical characteristics can be further improved.

The thickness of the measurement electrode is not particularly limited and is preferably 2 to 30 µm, for example. The width of the measurement electrode is not particularly limited, either, and is preferably 30 to 300 µm, for example. The "thickness of the measurement electrode" refers to the length (thickness) of the measurement electrode in a direction orthogonal to the surface of the element substrate, and the "width of the measurement electrode" refers to the length in a direction orthogonal to the longitudinal direction of the measurement electrode on the surface of the element substrate if the measurement electrode is linear or comb-like, for example.

The measurement electrode penetrates the element substrate or has an electrode arranged on the side face of the sensor element and is electrically connected to the lead terminal arranged on the other end face of the element substrate (also referred to as inter-layer connection or via connection). For example, Figs. 2A and 2D show an example in which a via hole 18 is formed in the element substrate 11, and the measurement electrodes 12a and 12b and the lead terminals 14 are electrically connected to each other through the via holes 18. As described above, the electrode may be extended to the side face of the sensor element and connected to the lead terminal via the side face of the sensor element. By configuring as above, electric connection between the pair of measurement electrodes and the lead terminals can be favorably ensured. Also, the wiring (connection) connecting the pair of measurement electrodes and the lead terminals can be made in an extremely short distance, whereby reduction of a metal material can be realized.

If the via hole is to be formed, two or more via holes may be formed in each electrode and the lead terminals for performing electric connection. Also, if the electrode is extended to the side face of the sensor element, the side face of the sensor element is preferably coated with insulation film such as glass coating. By configuring as above, electric contact between the wiring portion on the side face of the sensor element and the outer sheath body can be effectively prevented.

On either one of the end faces or inside of the element substrate, the heater electrode for heating the sensor element is arranged. By providing such a heater electrode, the particulate matter adhering to the pair of measurement electrodes and their peripheries can be heated and oxidized (that is, burned and removed), and the sensor element can be adjusted to a desirable temperature in mass measurement of the particulate matter or the like, and temperature adjustment can be made for stably measuring the change in the electrical characteristics between the pair of measurement electrodes. In Fig. 2D, the example in which the heater electrode 13 is arranged inside the element substrate 11 is shown, but the heater electrode 13 may be arranged on the one end face 16 (See Fig. 2A) or the other end face 17 (See Fig. 2C) of the element substrate 11. Also, the heater electrode may be arranged at plural spots or both on the one end face and the inside of the element substrate, for example.

As the material for the heater electrode, if the heater electrode is arranged in an inner layer, tungsten, molybdenum, platinum, copper, aluminum, silver, nickel, iron and the like can be cited, and particularly tungsten can be favorably used. If the heater electrode is arranged on the one end or the other end, a metal material excellent in heat resistance and corrosion resistance such as platinum, iridium, palladium, ruthenium, osmium, rhodium, silver, gold and the like can be favorably used. Particularly, platinum can be favorably used. Also, the thickness of the heater electrode is not particularly limited and is preferably 1 to 30 µm, for example.

The heater electrode is, as shown in Fig. 2D, preferably in a state in which thin linear metal materials are arranged closely with an interval on the same plane. By configuring as above, by applying a voltage to the heater electrode, the thin linear metal materials favorably generate heat. The heater electrode is not limited by the shape shown in Fig. 2D but may be such that the thin linear metal material is arranged in a wavy shape or meandering or the like, for example.

Also, the heater electrode is preferably arranged in a range including a region where the measurement electrode is arranged on one end face of the either one of end faces of the inside of the element substrate. That is, the heater electrode is preferably arranged in a region where the measurement electrode is arranged or in a range covering the measurement electrode (wider than the measurement electrode). For example, if the pair of measurement electrodes is arranged at the center part on the one end face of the element substrate, the heater electrode is preferably arranged in a range including the center part where the measurement electrode is arranged. By configuring as above, the particulate matter adhering to the measurement electrode can be favorably removed.

The heater electrode penetrates the element substrate or has an electrode arranged on the side face of the sensor element similarly to the measurement electrode and is electrically connected (also referred to as inter-layer connection or via connection) to the lead terminals arranged on the other end face of the element substrate. By configuring as above, electric connection between the heater electrode and the lead terminal can be favorably ensured. Also, the wiring (connection) connecting the heater electrode and the lead terminals can be made in an extremely short distance, whereby reduction of a metal material can be realized. For example, Figs. 2C and 2D show the case in which the via hole 18 is formed in the element substrate 11, and the heater electrode 13 and the lead terminal 14 are electrically connected through the via hole 18. As described above, the electrode may be extended to the side face of the sensor element and connected to the lead terminal via the side face of the sensor element.

On the other end face of the element substrate, as described above, the plurality of lead terminals electrically connected to each of the pair of measurement electrodes and the heater electrode are arranged. As the material of the lead terminal, platinum, iridium, palladium, ruthenium, osmium, rhodium, silver, gold, nickel and the like can be cited, and particularly, platinum can be used favorably. Also, the thickness of the lead terminal is not particularly limited and is preferably 2 to 30 µm.

The arrangement position of the lead terminal is not particularly limited as long as it is on the other end face of the element substrate, but it is preferably arranged at least on the outer peripheral portion of the other end face of the element substrate, for example. It is needless to say that the terminal may be arranged at the center part on the other end face of the element substrate.

For example, in Fig. 2C, the element substrate 10 has a disk shape (columnar shape), and the example in which on the outer peripheral portion excluding the center part of this disk-shaped element substrate 10, the two lead terminals 14a and 14b of the pair of measurement electrodes and the lead terminals 14c and 14d of the heater electrode are arranged with intervals is illustrated. In Fig. 2C, the example in which as each lead terminal 14, a terminal formed in a fan trapezoidal shape with a center angle of approximately 60° (however, the wiring portion continuing from the via-connected portion is excluded) is illustrated, but any other shape can be adopted as long as it is electrically connected with the pair of measurement electrodes and the heater electrode and also capable of connection with other wirings and the like for electric connection with the power source, the detection portion and the like of the particulate matter detecting device, not shown.

The heater electrode 13 shown in Figs. 2C and 2D branches at the other end face 17 of the element substrate 10, and the example in which two fan-trapezoidal shaped lead terminals 14d1 and 14d2 are provided is shown. By configuring as above, the resistance value in the lead terminal 14d1 from the lead terminal 14c and the resistance value in the lead terminal 14d2 from the lead terminal 14d1 are subtracted, the resistance value in the heater electrode 13 (that is, a resistance value at a spot to be actually heated) can be calculated, and the temperature of the heater electrode portion can be estimated from the resistance value.

### [1-2] Outer sheath body:

The outer sheath body is an outer sheath member of a particulate matter detecting device for storing the sensor element and the other wirings and the like inside thereof.

In the particulate matter detecting device of this embodiment, as shown in Figs. 1A to 1C, the columnar barrel portion 21 and the barrel-portion end face 22 in which the open frontal area 23 arranged on the one end face 26 of the barrel portion 21 and having the pair of measurement electrodes 12a and 12b of the sensor element 10 are exposed to the outside of the one end face 26 formed provided. The sensor element 10 has the pair of measurement electrodes 12a and 12b arranged inside the barrel portion 21 of the outer sheath body 20 so as to be exposed from the open frontal area 23 of the barrel-portion end face 22, for example.

The material of the outer sheath body 20 is not particularly limited, but stainless, iron, nickel, platinum, kovar, copper, gold, molybdenum, tungsten and the like can be cited.

The barrel portion 21 of the outer sheath body 20 has a columnar shape and is formed having a size that the plate-shaped sensor element 10 can be arranged perpendicularly to the axial direction of the barrel portion 21. The inner diameter of the barrel portion 21 is preferably equal to or slightly larger than the outer diameter of the sensor element 10 so that the sensor element 10 can be positioned easily when the sensor element 10 is contained. In Fig. 1A, the example in which the barrel portion 21 of the outer sheath body 20 is columnar is shown, but the sectional shape perpendicular to the axial direction may be a polygonal column such as a square, a hexagon and the like.

The barrel-portion end face 22 of the outer sheath body 20 has the open frontal area 23 from which the measurement electrodes 12a and 12b of the sensor element 10 are exposed to the outside formed when the sensor element 10 is arranged on the barrel-portion end face 22 side. As a result, in a state in which the sensor element 10 is contained inside the outer sheath body 20, the pair of measurement electrodes 12a and 12b can be brought into contact with the gas to be measured.

When the sensor element 10 is stored inside the outer sheath body 20, a washer 41 is preferably arranged between the barrel-portion end face 22 and the sensor element 10. By configuring as above, intrusion of the exhaust gas into the outer sheath body 20 through the open frontal area 23 of the barrel-portion end face 22 can be effectively prevented. The material or the like of the washer 41 is not particularly limited, but metal such as nickel, copper, stainless, iron, gold, platinum, kovar and the like can be favorably used.

The outer sheath body 20 may be further provided with a rear outer cylinder 28 for storing the sensor element 10 and the like and sealing the inside of the outer sheath body 20 on the other end face 27 of the barrel portion 21. The barrel portion 21 and the rear outer cylinder 28 are preferably constituted so that the end portion of either of them can be fitted in the end portion of the other. In Fig. 1C, the rear outer cylinder 28 is fitted on the other end face 27 side of the barrel portion 21, and the sensor element 10, the sensor connection portion 30, the second insulator 50, and the elastic member 40 are contained inside the outer sheath body 20 in a pressurized state. The rear outer cylinder 28 can be formed by a metal material similar to that of the barrel portion 21 of the outer sheath body 20.

Also, the outer sheath body 20 may be further provided with a screw nut 29 on the outer peripheral face of the barrel portion 21. This screw nut 29 can be used for mounting the particulate matter detecting device 100 of this embodiment when used to the pipe through which the gas to be measured flows. For example, by fitting the thread of this screw nut with a mounting portion (pipe joint) such as a boss or the like mounted in the pipe in advance, respectively, installation on the pipe can be accomplished.

The length of the outer sheath body 20 is not particularly limited, but since the particulate matter detecting device 100 of this embodiment can shorten the entire length of the particulate matter detecting device by arranging the sensor element 10 in parallel to the barrel-portion end face 22 of the outer sheath body 20, the length is preferably 20 to 70 mm or more preferably 30 to 40 mm, for example. If it is less than 20 mm, when the barrel-portion end face 22 is heated, the heat can be easily transferred to the end portion on the side opposite to the outer sheath body 20, while if the length exceeds 70 mm, the particulate matter detecting device 100 might become too large (long). The above-described "length of the outer sheath body" refers to the entire length of the outer sheath body 20 in the axial direction, and if the outer sheath body 20 has the rear outer cylinder 28, it refers to the length from the barrel-portion end face 22 of the outer sheath body 20 to an end face 28a of the rear outer cylinder 28.

### [1-3] Sensor connection portion

The particulate matter detecting device of this embodiment is preferably further provided with the sensor connection portion having connection wiring or the like for electric connection with the lead terminal of the sensor element.

This sensor connection portion has the hollow columnar (that is, a columnar shape which is at least partially hollow in the axial direction) insulator 31 having the open frontal area formed at least on the one end face 36, the plurality of connection terminals 32 arranged on the one end face 36 of the insulator 31 and capable of electric connection with the plurality of lead terminals 14 of the sensor element 10 by bringing the insulator 31 into contact with the other end face 17 of the sensor element 10, and the plurality of extraction electrodes 33 electrically connected with each of the plurality of connection terminals 32 and penetrating the inside of the insulator 31 and arranged from the one end face 36 to the other end face 37.

The insulator 31 is a lotus-shaped insulating member in which the plurality of extraction electrodes 33 is arranged extending in the axial direction. By taking this shape, transfer of heat from the sensor element 10 is suppressed, and excessive heat transfer to the sensor connection portion 30 and after can be effectively prevented. Also, since electric connection with the sensor element 10 and wiring inside the outer sheath body 20 can be performed extremely easily, a manufacturing cost of the particulate matter detecting device (or more specifically, an assembling cost of the particulate matter detecting device) can be reduced.

The material of the insulator 31 is not particularly limited, but alumina, cordierite, mullite, glass and the like can be cited, for example, and alumina or the like which is excellent in insulation, heat resistance, thermal impact resistance, corrosion resistance, mechanical strength and the like can be used more favorably.

The insulator 31 preferably has a hollow portion in a portion where the heater electrode 13 of the sensor element 10 (See Fig. 2D) is arranged in which at least a part of the insulator 31 in the axial direction is bored. By configuring as above, when the heater electrode generates heat, transfer of the heat can be effectively suppressed.

The thickness of the insulator (thickness excluding the hollow portion) in the section perpendicular to the axial direction of the insulator is preferably 0.5 to 5 mm, more preferably 1.0 to 3.0 mm or particularly preferably 1.5 to 2.5 mm. By setting the thickness of the insulator in this range, the sensor element can be firmly pressed onto the barrel-portion end face of the outer sheath body, and the lead terminal of the sensor element and the connection terminal of the sensor connection portion can be favorably connected to each other. Also, the extraction electrode can be favorably arranged inside the insulator.

The length in the axial direction of the insulator is preferably 10 to 60 mm or more preferably 25 to 35 mm. If it is less than 10 mm, transfer of the heat from the sensor element cannot be easily suppressed, while if the length exceeds 60 mm, the length of the particulate matter detecting device might become excessively long.

As shown in Fig. 1C, on the one end face 36 of the insulator 31, the plurality of connection terminals 32 capable of electric connection with the plurality of lead terminals 14 of the sensor element 10 are arranged. These connection terminals 32 are preferably arranged opposite to the lead terminals 14 of the sensor element 10 so that the both can be easily connected by pressure contact.

Also, the connection terminal 32 is electrically connected to the extraction electrode 33 arranged so as to penetrate the insulator 31 and wired on the other end face 37 side of the insulator 31. The sensor connection portion 30 shown in Fig. 1C has a lotus-shaped through hole formed in the columnar insulator 31, which is hollow for a predetermined length from the one end face 36, and the respective extraction electrodes 33 are arranged passing through the through hole.

As the material of the connection terminal and the extraction electrode, stainless, nickel, inconel, tantalum, titanium, aluminum, hastelloy, kovar, copper, gold, silver, platinum and the like can be cited. The connection terminal and the extraction electrode do not have to be made of an expensive metal material such as platinum, for example, and by using an inexpensive metal material, the manufacturing cost of the particulate matter detecting device can be further reduced.

### [1-4] Other constituent members:

As shown in Figs. 1A to 1C, the particulate matter detecting device 100 of this embodiment is preferably further provided with the elastic member 40 for pressing the sensor element 10 and the sensor connection portion 30 toward the barrel-portion end face 22 side of the outer sheath body 20 (that is, the one end face 26 side of the barrel portion 21) and bringing the plurality of lead terminals 14 of the sensor element 10 into pressure contact with the plurality of connection terminals 32 of the sensor connection portion 30. By means of such elastic member 40, electric connection between the lead terminal 14 and the connection terminal 32 is made extremely easy.

In Fig. 1C, this elastic member 40 is arranged on the other end portion side of the outer sheath body 20 and is configured to press the sensor element 10 and the sensor connection portion 30 toward the barrel-portion end face 22 of the outer sheath body 20. As the elastic member 40, a disc spring, for example, can be used.

Moreover, the particulate matter detecting device 100 of this embodiment may be further provided with the second insulator 50 arranged between the sensor connection portion 30 and the elastic member 40 and transferring the elastic force of the elastic member 40 to the sensor connection portion 30. By configuring as above, the elastic force of the elastic member 40 constituted by a disc spring or the like can be transmitted to the other end face 37 of the sensor connection portion 30 uniformly and favorably, and reliability of electric connection between the sensor element 10 and the sensor connection portion 30 can be further made better.

As the material of the second insulator 50, alumina, cordierite, mullite, glass and the like can be cited, for example, and alumina or the like which is excellent in insulation, heat resistance, thermal impact resistance, corrosion resistance, mechanical strength and the like can be used more favorably.

The second insulator 50 is preferably configured such that the extraction electrode 33 disposed to the other end face 37 side of the sensor connection portion 30 is extended and can be electrically connected to the wiring 42 such as a cable harness.

Also, on the end face of the outer sheath body 20 on the side opposite to the barrel-portion end face 22, a wiring protective material 43 such as a grommet is preferably disposed. As the wiring protective material 43, an elastic member made of rubber or elastomer having a through hole through which each wiring 42 is passed can be cited as a preferable example.

When a mass of the particulate matter is to be detected by the particulate matter detecting device of this embodiment, a method can be cited in which impedance calculated from electrostatic capacitance or the like between at least a pair of measurement electrodes is measured, the mass of the particulate matter adsorbed between the pair of measurement electrodes is calculated from a change in the impedance, and the particulate matter (mass) in the exhaust gas is detected, for example. Therefore, the particulate matter detecting device of this embodiment is preferably further provided with a detection portion for measuring impedance between at least one pair of measurement electrodes (hereinafter also referred to as a "measurement portion"). As the detection portion, an LCR meter, an impedance analyzer and the like capable of measuring not only the electrostatic capacitance but also impedance can be cited.

Also, the particulate matter detecting device of this embodiment is preferably further provided with a power supply for heater for applying a voltage to the heater electrode. As the power supply for heater, a constant-current power supply or the like can be cited.

Moreover, the particulate matter detecting device of this embodiment is preferably further provided with a dome-shaped gas retaining member capable of retaining a gas to be measured containing the particulate matter (hereinafter also referred to simply as a "gas" in some cases) on the barrel-portion end face side of the outer sheath body. This gas retaining member has at least two or more gas passage open frontal areas formed on the surface thereof for allowing the gas to be measured flow in and for allowing the gas retained inside the gas retaining member flow in and can retain the gas to be measured containing the particulate matter inside the gas retaining member while an appropriate gas flow is generated.

By further providing such gas retaining member, the particulate matter in the gas to be measured can be favorably made to adhere to the pair of measurement electrodes in a state exposed from the open frontal area of the barrel-portion end face.

### [2] Manufacturing method of particulate matter detecting device:

Subsequently, a method of manufacturing the particulate matter detecting device of this embodiment will be described by referring to the example of manufacture of the particulate matter detecting device 100 of this embodiment shown in Figs. 1A to 1C.

### [2-1] Fabrication of sensor element:

First, a fabrication method of the sensor element will be described. The sensor element can be fabricated by obtaining a plurality of ceramic green sheets (hereinafter also referred to simply as a "green sheet" in some cases) to become the element substrate using a ceramic material, disposing the pair of measurement electrodes, the heater electrode, and the lead terminals, respectively, on the obtained plurality of green sheets, and laminating these green sheets. The fabrication method of the sensor element will be described below in more detail.

### [2-1A] Preparation of forming material:

At least one type of ceramic material (dielectric raw material) selected from a group consisting of alumina, a cordierite forming material, mullite, glass, zirconia, magnesia, and titania and other components used as a forming raw material are mixed, and a slurry-state forming material is prepared. As the ceramic raw material, the above raw materials are preferable but they are not limiting. As the other raw materials, a binder, a plasticizer, a dispersant, dispersion medium and the like are preferably used.

The binder is not particularly limited and may be either of an aqueous binder and a non-aqueous binder. For example, as the aqueous binder, methylcellulose, polyvinyl alcohol, polyethylene oxide and the like can be favorably used, while as the non-aqueous binder, polyvinyl butyral, acrylic resin, polyethylene, polypropylene and the like can be favorably used. As the acrilyc resin, (meth)acrylic resin, (meth)acrylic acid ester copolymer, acrylic acid ester-methacrylic acid ester copolymer and the like can be cited as favorable examples.

An added amount of the binder is preferably 3 to 20 mass parts to 100 mass parts of the ceramic raw material or more preferably 6 to 17 mass parts. By setting such binder content, when the slurry-state forming raw material is formed to a green sheet and when it is dried and fired, prevention of a crack and the like is made possible.

As the plasticizer, glycerin, polyethylene glycol, dibutyl phthalate, di-2-ethylhexyl phthalate, diisononyl phthalate and the like can be used.

An added amount of the plasticizer is preferably 30 to 70 mass parts to 100 parts of the binder added amount or more preferably 45 to 55 mass parts. If the amount is larger than 70 mass parts, the green sheets become too soft and might become easy to be deformed in a process of working the sheet, while if it is less than 30 mass parts, the green sheet becomes too hard, and its handling performance might be become poor such that a crack is caused only by bending.

As the dispersant, anionic surfactant, wax emulsion, pyridine and the like can be used as an aqueous dispersant, while fatty acid, ester phosphate, synthetic surfactant and the like can be used as a non-aqueous dispersant.

The dispersant is preferably 0.5 to 3 mass parts to 100 mass parts of the ceramic raw material or more preferably 1 to 2 mass parts. If it is less than 0.5 mass parts, dispersion properties of the ceramic raw material might be lowered, and a crack or the like might be caused in the green sheet. If it is larger than 3 mass parts, impurities during firing are increased while the dispersion properties of the ceramic raw material are not changed.

As the dispersion medium, water and the like can be used. The dispersion medium is preferably 50 to 200 mass parts to 100 mass parts of the ceramic raw material or more preferably 75 to 150 mass parts.

The above raw materials are sufficiently mixed using a pot made of alumina and alumina cobble stones, and a slurry-state forming raw material for fabricating a green sheet is prepared. Alternatively, these materials may be mixed by a ball mill using a mono-ball for preparation.

Subsequently, the obtained slurry-state forming material for fabricating a green sheet is stirred under a reduced pressure for defoamation and further prepared so as to obtain predetermined viscosity. The viscosity of the slurry-state forming raw material obtained in the preparation of the forming raw material is preferably 2.0 to 6.0 Pa ·s, more preferably 3.0 to 5.0 Pa · s or particularly preferably 3.5 to 4.5 Pa · s. By adjusting the viscosity range as above, the slurry can be easily formed into a sheet-shape, which is preferable. The slurry viscosity might become difficult to be formed whether it is too high or too low. The slurry viscosity is a value measured by a B-type viscometer.

### [2-1B] Forming:

Subsequently, the slurry-state forming raw material obtained by the above method is formed so as to fabricate a sheet-shaped green sheet. The forming method is not particularly limited as long as a green sheet can be formed by forming the forming raw material into the sheet shape, and any of known methods including a doctor-blade method, a press forming method, a rolling method, a calendar-roll method and the like can be used.

### [2-1C] Formation of green-sheet laminated body:

Subsequently, at least one pair of the measurement electrodes, the heater electrode, and the lead terminals are disposed on the surface of each of the obtained green sheets. For example, first, a conductive paste is prepared for forming the pair of measurement electrodes, the heater electrode, and the lead terminals to be disposed, the obtained conductive paste is printed at corresponding positions on each green sheet as shown in Figs. 2A, 2C and 2D, and the pair of measurement electrodes, the heater electrode, and the lead terminal are formed.

The above-described conductive paste can be prepared by adding a binder and a solvent such as terpineol to a powder containing at least one type selected from a group consisting of platinum, iridium, palladium, ruthenium, osmium, rhodium, silver, gold and the like in accordance with the respective materials required for formation of the pair of measurement electrodes and the like and by sufficiently kneading it using a triroll mill or the like. The printing method of the conductive paste is not particularly limited but screen printing and the like can be used, for example.

At least one pair of the measurement electrodes and the corresponding lead terminals, and the heater electrode and the corresponding lead terminals are made capable of electric connection with each other penetrating through the element substrate by drilling a through hole in the thickness direction at a predetermined spot on the green sheet for forming the element substrate, filling the conductive paste at the upper part of the through hole and then, making the conductive paste advance and enter the through hole by suctioning from an opening of the through hole on the back face on which the conductive paste is filled.

Subsequently, the plurality of green sheets obtained as above is laminated in accordance with the configuration of the sensor element, and a green-sheet laminated body is obtained. It is preferable that a disc-shaped (columnar) green-sheet laminated body is obtained by punching or the like in the green-sheet laminated body in accordance with the shape of the sensor element to be fabricated. The punching may be performed in a state of a single green sheet.

### [2-1D] Firing]

Subsequently, the obtained green-sheet laminated body is dried and fired so as to obtain the sensor element. More specifically, the obtained green-sheet laminated body is dried at 60 to 150°C and fired at 1200 to 1600°C so as to fabricate a particulate matter detecting device. If the green sheet contains an organic binder, it is preferably degreased at 400 to 800°C before the firing. As described above, the sensor element 10 as shown in Figs. 2A to 2D can be obtained.

### [2-2] Fabrication of sensor connection portion:

Subsequently, a fabrication method of the sensor connection portion will be described. A forming raw material for the sensor connection portion is prepared by mixing at least one type of a ceramic raw material selected from a group consisting of alumina, a cordierite forming material, mullite, glass, zirconia, magnesia, and titania and other components used as a forming raw material. The above raw materials are preferable as the ceramic raw material but they are not limiting. As the other raw materials, a binder, a plasticizer, a dispersant, a dispersion medium and the like are preferably used.

Subsequently, the obtained forming raw material for the sensor connection portion is formed into a columnar shape having a hollow portion in which at least a part in the axial direction is hollow so as to fabricate an unfired insulator. Subsequently, the obtained unfired insulator is dried and fired so as to obtain an insulator. Drying and firing can be performed similarly to the fabrication method of the element substrate of the sensor element.

Subsequently, a through hole penetrating from one end face to the other end face for disposing the extraction electrode is formed in this insulator. This through hole does not have to be formed in the fired insulator but the insulator may be formed in the shape having a through hole in advance in forming or the through hole may be formed in drying, for example.

Subsequently, on the one end face of the obtained insulator, the connection terminal is arranged for connection with the lead terminal of the sensor element, and moreover, the extraction electrode is arranged inside the through hole of the insulator. As for the connection terminal, it is preferable that a metal member in which the connection terminal and the extraction electrode are integrated is fabricated in advance in a state connected to the distal end of the extraction electrode, and the portion of the connection terminal is fixed to the one end face of the insulator while the portion of the extraction electrode is inserted into the through hole of the insulator.

### [2-3] Fabrication of second insulator:

As for the second insulator, a forming raw material for the second insulator is prepared by the method similar to that for the insulator of the sensor connection portion, and the obtained forming raw material for the second insulator is formed into a predetermined shape so as to obtain an unfired second insulator. Then, the obtained unfired second insulator is dried and fired so as to obtain the second insulator.

### [2-4] Fabrication of outer sheath body:

The outer sheath body can be fabricated by pressing a predetermined metal material such as stainless, iron, nickel, platinum, kovar, copper, gold, molybdenum, tungsten and the like with the same thickness shape into a columnar shape having a hollow barrel portion and a barrel-portion end face arranged on one end face of the barrel portion. Alternatively, the outer sheath body can be also fabricated by forging or cutting of a predetermined metal material. In the barrel-portion end face, an open frontal area from which the pair of measurement electrodes of the sensor element is exposed to the outside of the one end face is formed. Also, the rear outer cylinder for sealing the inside of the outer sheath body is preferably fabricated using the similar metal material.

### [2-5] Assembling of particulate matter detecting device:

Inside the obtained outer sheath body, the sensor element is arranged so that the measurement electrodes are exposed from the open frontal area in the barrel-portion end face. Though not particularly limited, the sensor element is preferably arranged so that the one end face of the sensor element is parallel with the barrel-portion end face. At this time, a washer made of nickel is preferably arranged, for example, between the barrel-portion end face and the sensor element.

Subsequently, inside the outer sheath body, the sensor connection portion is arranged so that the lead terminal of the sensor element and the connection terminal of the sensor connection portion are in contact with each other. After that, the second insulator is arranged on a rear stage of the sensor connection portion and moreover, an elastic member such as a disc spring is arranged. The extraction electrode extending from the other end face of the sensor connection portion is connected to the wiring such as a harness via the second insulator and is electrically connected with a detector and a power supply.

As described above, after each member is arranged inside the outer sheath body, the rear outer cylinder is fitted with the other end portion side of the outer sheath body, and the lead terminal of the sensor element and the connection terminal of the sensor connection portion are brought into pressure contact by the elastic force of the elastic member. A wiring protective material such as a grommet is arranged in the rear outer cylinder as necessary. In this way, the particulate matter detecting device as shown in Figs. 1A to 1C can be manufactured.

### Example

The present invention will be described below more specifically by referring to examples, but the present invention is not limited by these examples at all.

### (Example 1)

In this example, the sensor element 10 as shown in Figs. 2A to 2D was fabricated, and the particulate matter detecting device 100 as shown in Fig. 1A was fabricated using this sensor element.

### (Fabrication of sensor element)

### (Preparation of forming raw material)

By using alumina as a dielectric raw material, polyvinyl butyral as a binder, di-2-ethylhexyl phthalate as a plasticizer, sorbitan trioleate as a dispersant, an organic solvent (xylene : butanol = 6 : 4 (mass ratio)) as a dispersion medium were used and they were put in a pot made of alumina and mixed so as to prepare a slurry-state forming raw material for fabricating a green sheet. A use amount of each raw material was 7 mass parts of the binder, 3.5 mass parts of the plasticizer, 1.5 mass parts of the dispersant, and 100 mass parts of the organic solvent for 100 mass parts of alumina.

Subsequently, the obtained slurry-state forming raw material for fabricating a green sheet was stirred and defoamed under a reduced pressure and prepared to have viscosity of 4 Pa · s. The slurry viscosity was measured by B-type viscometer.

### (Forming)

Subsequently, the slurry-state forming raw material obtained by the above method was formed into a sheet shape by using the doctor blade method. The thickness of the green sheet was set at 600 µm.

Subsequently, on the surface of the obtained green sheet, the measurement electrodes 12, the heater electrode 13, and the lead terminal 14 were formed as shown in Figs. 2A to 2D. A conductive paste for forming the measurement electrodes and the like was prepared by adding 2-ethylhexanol as a solvent, polyvinyl butyral as a binder, di-2-ethylhexyl phthalate as a plasticizer, sorbitan trioleate as a dispersant, alumina as a common material of the green sheet, and glass frit as a sintering aid to a platinum powder and by sufficiently kneading it using a grinder and a triroll mill (platinum : alumina : glass frit : 2-ethylhexanol : polyvinyl butyral : di-2-ethylhexyl phthalate : sorbitan trioleate = 80 : 15 : 5 : 50 : 7 : 3.5 : 1) in mass ratio.

The measurement electrode was made in a comb-tooth shape having the width of 100 µm and the thickness of 10 µm, and the heater electrode was made having the width of 440 µm and the thickness of 10 µm. Also, the lead terminal was made to have the thickness of 20 µm. The measurement electrodes and the lead terminals corresponding to them and the heater electrode and the corresponding lead terminal were penetrated through the green sheet and made capable of electric connection with each other by forming through holes (via holes 18) at predetermined spots in the green sheet in the thickness direction, filling the conductive paste on the upper part of the through hole and then, advancing the conductive paste by sucking it from the opening of the through hole on the back face on which the conductive paste was filled.

Each green sheet on which the measurement electrodes and the like were formed was laminated so as to obtain the sensor element 10 as shown in Figs. 2A to 2D, and the green-sheet laminated body was obtained. The green sheets were pressurized and laminated using a mono-axial press capable of heating the green sheet. After that, the green-sheet laminated body was punched in a disk shape so as to obtain the disk-shaped (cylindrical) unfired sensor element.

### (Firing)

The obtained unfired sensor element was dried at 120°C and fired at 1500°C so as to fabricate the sensor element. The obtained sensor element had the diameter of 10 mm and the thickness of 1.45 mm.

### (Fabrication of sensor connection portion)

By using the forming raw material similar to the forming raw material used for fabrication of the sensor element, a columnar unfired insulator was fabricated. The obtained unfired insulator was dried at 120°C and fired at 1500°C so as to fabricate the insulator for sensor connection portion. The insulator is columnar having the diameter of 10 mm and the axial length of 32.5 mm, and a hollow portion with the diameter of 6 mm is formed in the axial direction from one end face.

In the obtained insulator, as shown in Fig. 1C, a through hole penetrating from one end face to the other end face was formed for disposing the extraction electrode 33. The extraction electrode was arranged in this through hole, and the connection terminal is arranged on the one end face of the insulator so as to fabricate the sensor connection portion. Regarding the connection terminal, a metal member made of nickel in which the connection terminal and the extraction electrode are integrated was fabricated in a state connected to the distal end of the extraction electrode in advance, and while the portion of the extraction electrode was inserted into the through hole of the insulator, the portion of the connection terminal was fixed to the one end face of the insulator.

### (Fabrication of particulate matter detecting device)

The obtained sensor element and sensor connection portion were contained inside the outer sheath body 20 as shown in Figs. 1A to 1C so as to fabricate the particulate matter detecting device 100. Electric connection between the sensor element 10 and the sensor connection portion 30 was made by bringing the plurality of lead terminals 14 on the other end face 17 of the sensor element 10 (that is, the back face of the sensor element) into pressure contact (that is, each electrode is pressed) with the plurality of connection terminals 32 of the sensor connection portion 30.

In the particulate matter detecting device of this example, a use amount of platinum used during manufacture of the device was 9.1 mg. That is, platinum used for the electrodes and the like was only platinum contained in the conductive paste used for fabrication of the sensor element, and a use amount of expensive platinum was extremely small. Also, since electric connection can be made by bringing the plurality of connection terminals of the sensor connection portion into pressure contact, assembling of the device was extremely easy. The configuration of the particulate matter detecting device and the use amount of platinum of Example 1 are shown in Table 1. The "connecting method" in Table 1 refers to a connecting method between the lead terminal of the sensor element and the connection terminal to be electrically connected to this sensor element (including wiring such as a harness).

**[Table 1]**

| | | Example 1 | Comparative Example 1 |
|---|---|---|---|
| Sensor element | Shape | columnar | Plate shape elongated in one direction |
| | size | Diameter: 10 mm | Length: 67.6 mm |
| | | Thickness: 1.45 mm | Width: 4.25 mm |
| | | | Thickness: 1.45 mm |
| Platinum used amount | | 9.1 mg | 114.7 mg |
| Particulate matter detecting device | | Length: 56 mm | Length: 80.5 mm |
| | | Diameter of outer | Diameter of outer |
| | | sheath body: 12 mm | sheath body: 15.3 mm |
| Connecting method | | Pressing of connection terminal (pressure contact) | Connector method |

### (Comparative Example 1)

In this Comparative Example, the particulate matter detecting device was fabricated using the sensor element 110 as shown in Figs. 3A and 3B. The size of the sensor element was such that the length in the longitudinal direction was 67.6 mm, the width was 4.25 mm, and the thickness was 1.45 mm.

### (Fabrication of sensor element)

The forming raw material similar to that of Example 1 was prepared, the green sheet was fabricated, and the measurement electrodes, the heater electrode, the lead terminal, and each wiring were fabricated on the obtained green sheet using the conductive paste prepared similarly to Example 1. The measurement electrode had a comb-tooth shape with the width of 100 µm and the thickness of 10 µm, the heater electrode had the width of 440 µm and the thickness of 10 µm, and the lead terminal had the thickness of 20 µm. The shape and size of the measurement electrode were substantially the same as those of the sensor element in Example 1.

Also, the wiring connecting the measurement electrode to the lead terminal was set at the width of 350 µm, the thickness of 10 µm, and the length of 54 mm, and the wiring connecting the heater electrode to the lead terminal was set at the width of 1550 µm, the thickness of 20 µm, and the length of 50 mm. The width and thickness of each wiring and the like are values at the largest portion of the wiring.

Such green sheets were laminated and fired using the method similar to Example 1 so as to fabricate the sensor element as shown in Figs. 3A and 3B.

The obtained sensor element was contained inside the hollow columnar outer sheath body using three insulators fixing the sensor element and a talc powder. Specifically, in a state in which the sensor element was supported by an insulator (first insulator), a certain amount of talc powder was filled from behind the outer sheath body and pressed and solidified by pressing the talc powder from behind the outer sheath body. Moreover, another insulator (second insulator) is arranged from behind the outer sheath body, the talc powder was filled again and pressed and solidified. After that, a third insulator was arranged, and the sensor element was contained in a state fixed to the inside of the outer sheath body. After that, to the lead terminal on the other end side of the sensor element, a connection plug (connector) for electric connection was arranged so as to fabricate the particulate matter detecting device.

The particulate matter detecting device of Comparative Example 1 had a use amount of platinum used during manufacture of the device of 114.7 mg, which means that approximately 12.6 times the amount of platinum in Example 1 was used. Particularly, the amount of platinum used for the wiring portion of the heater electrode was approximately 70% of the entire platinum use amount. The configuration and platinum use amount of the particulate matter detecting device of Comparative Example 1 are shown in Table 1. The "connector method" in the column of the "connecting method" in Table 1 refers to a connecting method using the above-described connection plug.

Regarding the particulate matter detecting device of Comparative Example 1, as described above, the sensor element was fixed using the insulators and the talc powder, and electric connection of the sensor element was ensured by arranging a connection plug (connector) on the lead terminal on the other end side of the sensor element, and assembling of the device was extremely complicated.

### Industrial Applicability

The particulate matter detecting device of the present invention immediately detects occurrence of a defect of the DPF, can be favorably used for recognizing abnormality of the device and can contribute to prevention of air pollution. Explanation of Reference Numerals

- 10: sensor element
- 11: element substrate
- 12: pair of measurement electrodes
- 12a, 12b: measurement electrode
- 12x: comb-tooth portion
- 12y: comb-spine portion
- 13: heater electrode
- 14: lead terminal
- 16: one end face
- 17: the other end face
- 18: via hole
- 20: outer sheath body
- 21: barrel portion
- 22: barrel-portion end face
- 23: open frontal area
- 26: one end face
- 27: the other end face
- 28: rear outer cylinder
- 29: screw nut
- 30: sensor connection portion
- 31: insulator
- 32: connection terminal
- 33: extraction electrode
- 36: one end face
- 37: the other end face
- 40: elastic member
- 41: washer
- 42: wiring
- 43: wiring protective material
- 50: second insulator
- 100: particulate matter detecting device
- 110: sensor element
- 111: element substrate
- 112: pair of measurement electrodes
- 113: heater electrode
- 114, 115: wiring
- 116, 117: lead terminal

## Claims

1. A particulate matter detecting device comprising:
a sensor element having a plate-shaped element substrate, at least one pair of measurement electrodes arranged on one end face of said element substrate, a heater electrode arranged on either one of said end faces or inside thereof, and a plurality of lead terminals arranged on the other end face of said element substrate and electrically connected to each of said measurement electrodes and said heater electrode; and
an outer sheath body having a columnar barrel portion and a barrel-portion end face arranged on one of end faces of said barrel portion and having an open frontal area formed for exposing said measurement electrode of said sensor element toward the outside of said one end face of said barrel portion, wherein
said sensor element is arranged inside said barrel portion such that said measurement electrode is exposed from said open frontal area of said barrel-portion end face; and
said one end face side of said outer sheath body is brought into contact with a gas to be measured, particulate matter contained in said gas to be measured is made to adhere to said measurement electrodes, and a change in electric characteristics between said measurement electrodes is measured so that the particulate matter in said gas to be measured can be detected.

2. The particulate matter detecting device according to claim 1, wherein
said measurement electrodes of said sensor element are arranged at the center part on one end face of said element substrate.

3. The particulate matter detecting device according to claim 2, wherein
each measurement electrode constituting one pair of said measurement electrodes is a comb-like electrode having a plurality of comb-tooth portions aligned planarly and a comb-spine portion connecting said plurality of comb-tooth portions at one ends thereof, and said comb-tooth portions of respective said measurement electrodes are arranged so as to be meshed with each other.

4. The particulate matter detecting device according to claim 2 or 3, wherein
said heater electrode of said sensor element is arranged in a range including a region where said measurement electrodes are arranged on said one end face of said either of the end faces or inside said element substrate.

5. The particulate matter detecting device according to any one of claims 2 to 4, wherein
said lead terminal of said sensor element is arranged at least on an outer peripheral portion of said the other end face of said element substrate.

6. The particulate matter detecting device according to any one of claims 1 to 5, further comprising:
a hollow columnar insulator having an open frontal area formed at least on one end face; a plurality of connection terminals arranged on one end face of said insulator and capable of electric connection with said plurality of lead terminals of said sensor element by bringing said insulator into contact with said the other end face of said sensor element; and a sensor connection portion having a plurality of extraction electrodes that is electrically connected to each of said plurality of connection terminals and that penetrates the inside of said insulator and is arranged from said one end face to the other end face.

7. The particulate matter detecting device according to claim 6, further comprising:
an elastic member that presses said sensor element and said sensor connection portion toward said barrel-portion end face side of said outer sheath body and brings said plurality of lead terminals of said sensor element into pressure contact with said plurality of connection terminals of said sensor connection portion.

8. The particulate matter detecting device according to claim 7, further comprising:
a second insulator arranged between said sensor connection portion and said elastic member for transferring an elastic force of said elastic member to said sensor connection portion.
